# DEMANDE DE BREVET EUROPEEN

(11) **EP 2 175 009 A1**
(43) Date de publication de la demande: **14.04.2010**
(21) Numéro de dépôt: 09290688.2
(22) Date de dépôt: 10.09.2009
(51) Int. Cl.: C10G 25/02, B01J 23/80

(54) **Mise en oeuvre de solides à base de ferrite de zinc dans un procédé de désulfuration profonde de coupes hydrocarbonées**

(30) Priorité: 10.10.2008 FR 0805623
(71) Demandeur: IFP, 92852 Rueil-Malmaison Cédex (FR)
(72) Inventeur: Babe, Celine, 69100 Villeurbanne (FR); Baudot, Arnaud, 69390 Vernaison (FR); Bazer-Bachi, Delphine, 69230 Saint-Genis-Laval (FR); Bobin, Carole, 69290 Grezieu la Varenne (FR); Geantet, Christophe, 01700 Miribel (FR); Huard, Thierry, 69360 Saint Symphorien D'Ozon (FR); Tanguy, Anthony, 69008 Lyon (FR)

(57) **Abrégé**

L'invention concerne un procédé de désulfuration d'une charge hydrocarbonée non oxygénée, comprenant des composés soufrés organiques, par captation de soufre sur un composé massique comprenant des oxydes de Fer ou des oxydes de Zinc et plus de 70% poids de ferrite de zinc. Le procédé est opéré en présence d'hydrogène à une température comprise entre 200°C et 450°C.

## Description

Les futures spécifications sur les carburants automobiles prévoient une forte diminution de la teneur en soufre dans les carburants. La législation européenne définit les spécifications des carburants gazoles qui sont depuis 2005 à 50 ppm de soufre et seront en 2009 à 10 ppm de soufre. L'évolution des spécifications de teneur en soufre dans les carburants nécessite l'amélioration des procédés catalytiques d'hydrotraitement existants ou la mise au point de nouveaux procédés de désulfuration profonde des gazoles.

Parmi les nouvelles voies de désulfuration des gazoles, les procédés de purification par adsorption des composés soufrés sur un adsorbant sélectif présentent une alternative intéressante aux procédés classiques d'hydrodésulfuration. La présente invention est relative à un procédé de désulfuration profonde sur une ferrite de zinc.

On rappelle qu'une unité classique d'hydrodésulfuration transforme l'essentiel des composés soufrés contenus dans un distillat en H₂S dans des conditions de température voisine de 450°C, et des pressions comprises entre 20 et 60 bars. Toutefois une partie des composés soufrés est dite "réfractaire" à l'hydrodésulfuration car leur transformation en H₂S nécessite des conditions en pression et température nettement plus élevées. Ces molécules réfractaires font partie de la famille des dibenzothiophéniques alkylés. La teneur en composés réfractaires post-hydrodésulfuration à traiter dépend de plusieurs paramètres dont le niveau de pression et de température de l'unité d'hydrodésulfuration, les quantités de catalyseurs mises en jeu et la WH pratiquée. La teneur en composés réfractaires dans l'effluent d'une unité d'hydrodésulfuration est en général supérieure à 15 ppmS et généralement inférieure à 500ppmS, voire 350ppmS, voire 50ppmS.

Lors d'une purification par adsorption, telle qu'envisagée dans la présente invention, les composés réfractaires vont réagir sélectivement en présence d'hydrogène avec le solide, libérant la molécule organique sans l'atome de soufre, qui reste piégé dans l'adsorbant sous une forme de sulfure. Cette adsorption avec modification des molécules et de l'adsorbant s'appelle une chimisorption réactive. Le fait que le soufre soit directement piégé sur l'oxyde permet de déplacer très fortement l'équilibre de la réaction et est particulièrement adapté en traitement de purification. De ce fait, contrairement aux procédés d'hydrodésulfuration conventionnels avec lesquels il est nécessaire d'augmenter la pression partielle d'hydrogène pour augmenter la libération du soufre sous forme d'H₂S des composés organiques soufrés, la purification par adsorption ne nécessite pas l'emploi d'une pression élevée d'hydrogène. Ceci conduit à une réduction des coûts d'investissement et opératoires, notamment au niveau des compresseurs d'hydrogène, sur les équipements concernés. De plus, le soufre étant piégé sur l'oxyde, l'hydrogène sortant du réacteur où l'étape de désulfuration a lieu ne contient pas de soufre (notamment sous la forme d'H₂S). Il n'est donc pas nécessaire de retraiter l'hydrogène afin de le débarrasser de son soufre.

### Art antérieur:

La demande de brevet US 2006/0191821A1 décrit un procédé de désulfuration sur un oxyde de zinc éventuellement promu par un oxyde de fer ou de cuivre supporté sur un support poreux à base de silice et/ou d'alumine.

La demande de brevet WO 2007/021084 décrit des oxydes mixtes de zinc et d'aluminium utilisés dans des procédés de désulfuration. Ces solides sont réduits avant utilisation.
Le brevet US 4 985 074 décrit l'utilisation pour les charges cokées et naphta de solides à base d'oxydes de cuivre-zinc ou oxydes de cuivre-zincalumine obtenus par coprécipitation. Une réduction du solide sous hydrogène avant l'étape de désulfuration est réalisée.

### Description sommaire de l'invention

L'invention concerne un procédé de désulfuration d'une charge hydrocarbonée non oxygénée, comprenant des composés soufrés organiques, par captation de soufre sur un composé massique comprenant des oxydes de fer ou des oxydes de zinc et plus de 70% poids de ferrite de zinc. Le procédé est opéré en présence d'hydrogène à une température comprise entre 200°C et 450°C.

### Description détaillée de l'invention

L'invention concerne un procédé de désulfuration d'une charge hydrocarbonée non oxygénée, de préférence une coupe essence, kérosène ou diesel, de préférence une coupe diesel, comprenant des composés soufrés organiques, de préférence des composés soufrés cycliques, par captation de soufre sur un composé massique comprenant des oxydes de fer ou des oxydes de zinc et plus de 70% poids de ferrite de zinc, de préférence plus de 80% poids de ferrite de zinc, de manière plus préférée plus de 98% poids de ferrite de zinc, de manière encore plus préférée plus de 99,5% poids de ferrite de zinc, ledit procédé étant opéré en présence d'hydrogène à une température comprise entre 200°C et 450°C.

La pression est généralement comprise entre 0,2 et 3,5 MPa, de préférence entre 0,5 et 3 MPa, de manière encore préférée entre 0,5 et 1,5 MPa. La vitesse volumique horaire de charge à traiter est généralement comprise entre 0,1 h⁻¹ et 10 h⁻¹, de préférence entre 0,5 h⁻¹ et 5 h⁻¹. La vitesse volumique horaire ou WH de charge liquide traitée est définie comme le débit volumique de charge liquide traitée sur le volume de composé massique solide. Le rapport volumique hydrogène/charge hydrocarbonée est généralement compris entre 5 et 400, de préférence entre 50 et 300. Les débits d'hydrogène et celui de charge liquide à traiter sont pris aux conditions normales.

L'oxyde mixte de type ferrite de zinc selon l'invention est très actif même dans des conditions opératoires douces par rapport aux conditions d'hydrodésulfuration conventionnelles et aux conditions d'hydrodésulfuration "haute pression" destinées à atteindre les teneurs en soufre dans les carburants fixées par les dernières normes promulguées dans les pays développés. Tout en opérant à des pressions en hydrogène comprises entre 0,5 et 3 MPa, elle permet de réduire les composés soufrés réfractaires à des teneurs semblables à ce qui est atteint par les unités d'hydrodésulfuration haute pression opérant à 6 MPa et plus.

Le procédé selon l'invention permet de produire une coupe hydrocarbonée désulfurée à des teneurs inférieures ou égales à 10 ppm en soufre, préférentiellement inférieures à 5 ppm en soufre, et de manière encore préférée inférieures à 1 ppm en soufre. Ce procédé est particulièrement efficace pour éliminer les composés soufrés réfractaires aux traitements d'hydrodésulfuration conventionnels tels que le diméthyldibenzothiophène dans les coupes gazoles.

Le procédé selon l'invention constitue une alternative simple au procédé d'hydrodésulfuration "haute pression" qui permet de revamper à moindre coût des unités d'hydrodésulfuration conventionnelles "basse pression" pour atteindre les teneurs en soufre fixées par les dernières normes.

L'oxyde mixte à base de fer et de zinc de la présente invention peut également être utilisé en multicyclage en faisant alterner des étapes d'adsorption du soufre et des étapes de régénération du solide par voie oxydante.

En général, augmenter la température permet de désulfurer les composés soufrés les plus réfractaires. Dans le cas de composés soufrés tels que le thiophène, la ferrite de zinc est active à partir de 150°C, alors que dans le cas des composés benzothiophéniques, elle est active à partir de 200°C, et dans les cas des composés soufrés particulièrement réfractaires de composés dibenzothiophènes alkylées, la ferrite de zinc est active à partir de 300°C.

Un cycle d'adsorption utilisant des adsorbants classiques est constitué d'une succession d'étapes récurrentes :
- étape 1 : phase d'activation du solide. Cette étape de préréduction est délicate à opérer industriellement en lit fixe du fait de l'exothermicité de cette réaction.
- étape 2 : phase d'adsorption : la charge vaporisée est mise en contact avec de l'hydrogène sur l'adsorbant. Une fois que le solide est saturé en soufre ou que les spécifications en soufre de l'effluent ne sont plus respectées, le solide doit être régénéré.
- étape 3 : phase de vidange et d'inertage de la colonne d'adsorption. Il s'agit d'une phase de stripage avec un gaz inerte pour éliminer les hydrocarbures en partie convertis et les gaz présents dans le volume poreux. On vise en effet à éviter tout mélange d'hydrogène qui est utilisé dans la phase d'adsorption avec de l'oxygène qui est utilisé dans la phase de régénération.
- étape 4 : étape de régénération de l'adsorbant. La régénération s'effectue généralement par une oxydation douce, en utilisant par exemple de l'oxygène fortement dilué pour contrôler la combustion.
- étape 5 : phase de vidange du lit d'adsorbant avec un gaz inerte pour éliminer toute trace d'oxygène résiduelle dans le volume poreux.

Sur l'ensemble du cycle, l'étape n°2 constitue la seule étape productive dans le processus de désulfuration alors que les autres étapes, bien que nécessaires, constituent un temps mort non productif dans le processus de désulfuration. De ce fait, l'opérateur de ce type d'opération de séparation devra viser à maximiser la proportion de la durée de la phase n° 2 par rapport au temps de cycle total.

La présente invention présente un avantage technologique certain puisque la mise en oeuvre de la ferrite de zinc ne nécessite pas d'étape d'activation. De ce fait, le ratio "durée de phase d'adsorption/durée totale de cycle" s'en trouve grandement amélioré. La productivité de l'opération de désulfuration par ferrite de zinc selon l'invention est toujours supérieure à celles des procédés classiques.

Un autre avantage réside dans le fait que l'étape d'activation étant exothermique, il est nécessaire de réguler très précisément sa conduite, sans quoi des mécanismes irréversibles de modifications structurales de l'adsorbant, induites par la température (frittage, déphasage, ...), peuvent avoir lieu. En l'absence de cette étape, la conduite de la ferrite de zinc selon l'invention pour la désulfuration profonde de charges hydrocarbures est plus aisée que celle des adsorbants classiques, tels que ceux revendiqués dans l'art antérieur.

Le procédé de préparation d'un oxyde mixte de type ferrite de zinc comprend généralement:
- une étape de coprécipitation d'un mélange de sels précurseurs de zinc II et de fer III, en présence d'une base, à un pH compris entre 6,1 et 6,9 et à une température comprise entre 30°C et 50°C
- une étape de filtration du précipité obtenu
- une étape de séchage pendant une durée comprise entre 12 et 24 heures, à une température comprise entre 125°C et 175°C
- une étape de calcination en présence d'oxygène à une température comprise entre 600°C et 700°C, pendant une durée comprise entre 1 heure et 3 heures.

La ferrite de zinc de formule ZnFe₂O₄ présente généralement une structure cristalline de type franklinite.

La taille des cristallites de ferrite de zinc est généralement comprise entre 20 et 5000 Å, de préférence entre 100 et 1000 Å.

La surface spécifique de la ferrite de zinc est généralement comprise entre 2 et 100 m²/g. La ferrite de zinc est active même pour des surfaces spécifiques inférieures à 10 m²/g. La ferrite de zinc pourra être mise en oeuvre sous forme de poudre, de billes ou d'extrudés. La ferrite de zinc est préférentiellement opérée en lit fixe mais il est également possible de l'opérer en lit circulant.

L'oxyde mixte de type ferrite de zinc est généralement obtenu par une coprécipitation suivie d'une calcination. Le procédé de préparation ne nécessite pas d'étape intermédiaire d'imprégnation d'une seconde phase agissant comme promoteur. L'oxyde mixte ferrite de zinc est actif même avec des surfaces spécifiques inférieures à 10 m²/g. La synthèse selon l'invention d'une masse active à base de ferrite de zinc ne nécessite pas de protocole sophistiqué visant à développer une surface spécifique importante nécessaire à une réactivité élevée de ce solide vis-à-vis des molécules soufrées. Le procédé de préparation ne nécessite pas d'étape de réduction afin de rendre l'oxyde actif ni d'étape de dispersion du promoteur (par exemple un oxyde de fer ou de cuivre) sur l'oxyde. L'étape de réduction, par exemple à l'hydrogène, est généralement délicate à opérer industriellement en lit fixe du fait de l'exothermicité de la réaction.

### Exemples

### Exemple n°1 (selon l'invention) : préparation d'un ferrite de zinc

Un pied d'eau est introduit dans un réacteur en verre borosilicate double enveloppe puis chauffé à 40°C, sous une puissance d'agitation d'environ 150 W/m³ libérée par un mobile à débit axial de type hélice à pales.

Les précurseurs sont des solutions aqueuses de nitrate de zinc (II), nitrate de fer (III). Les concentrations massiques de zinc et de fer sont respectivement de 13g/l et 22,5g/l.

La base est une solution aqueuse d'ammoniaque. La concentration massique en ammoniaque est de 225 g/l.

Les précurseurs et la base sont introduits dans le réacteur via un système de pompage permettant de réguler les débits d'introduction et la durée de la synthèse. La maîtrise du pH est assurée par le débit de la pompe basique : il est maintenu constant à 6,5 ± 0,2 tout au long de la coprécipitation.

Lors de la réaction, une puissance d'agitation d'environ 75 W/m³ est appliquée dans le milieu réactionnel et une température de 40°C ± 2°C est maintenue dans le réacteur via un bain thermostaté.

Le précipité est filtré à chaud sur Büchner. Le gâteau humide obtenu après 45 minutes de filtration est séché à l'étuve pendant 18h à une température de 150°C.

Le solide obtenu est ensuite calciné en présence d'oxygène moléculaire à une température de 650°C durant 2h.

Le solide obtenu est caractérisé par diffraction des rayons X via un diffractomètre à poudres de type Bragg-Brentano en configuration θ-θ. Les conditions d'enregistrement sont les suivantes : une tension de l'anticathode réglée à 35 kV, l'intensité dans le filament de l'anticathode fixée sur 35 mA, le pas d'échantillonnage égale à 0,05°2θ, le temps de comptage par pas fixé à 5s et un domaine angulaire allant de 2 à 72°2θ. Sur le diffractogramme expérimental obtenu sur notre solide, la position des raies est similaire à celle d'une structure cristallographique connue et répertoriée dans la base de donnée "Powder Diffraction File" correspondant à la Franklinite ZnFe₂O₄ (PDF N° 00-022-1012).

Les positions des raies expérimentales les plus intenses sont les suivantes pour notre solide : 29,93°2θ - 35,27°2θ - 56,61°2θ - 62,15°2θ. Pour la Franklinite, elles sont à 29,92°2θ - 35,26°2θ - 56,63°2θ - 62,21 °2θ.

Quant au paramètre de maille (a = b = c dans le cas d'un système cubique), il est identique, c'est à dire égal à 8,44 Å. Pour notre solide, la taille moyenne des cristallites de ferrite de zinc est de 410 ± 40 Å.

Une analyse semi-quantitative par fluorescence X a également été effectuée sur le solide synthétisé. Les teneurs obtenues après correction d'une perte au feu effectuée à 550°C, 4h (PAF = 0,3%) conduit aux teneurs suivantes : Wt% Fe = 42,48 ± 0,74% et Wt% Zn = 23,18 ± 0,78%.

Enfin, la surface spécifique développée par le solide a été estimée par une volumétrie à l'azote à basse température suivant les normes ASTM D 3663-84 ou NFX 11-621 : elle est égale à 6 ± 1 m²/g.

### Exemple n°2 (selon l'invention) : test de désulfuration par chimisorption sur ferrite de zinc avec charge modèle de type diesel contenant un composé soufré réfractaire

Le deuxième exemple décrit l'utilisation du solide dans un réacteur de type lit fixe. 12 grammes de solide sous forme de poudre sont introduits dans une colonne de 1 cm de diamètre intérieur et de volume utile 9 cm³. La colonne est placée dans une étuve ventilée opérant à 380°C La régulation de la température est une régulation externe, avec mesure de la température de paroi de la colonne, ce qui permet de travailler sans doigt de gant et d'éliminer tout chemin préférentiel dans la colonne.

L'effluent de sortie est maintenu en température et prélevé au moyen d'une boucle d'échantillonnage pour un suivi analytique en ligne. Les composés sont analysés par chromatographie en phase gazeuse équipée d'une détection FID et d'un analyseur PFPD.

Une charge modèle liquide constituée de dodécane et contenant 50 ppmS massiques de 2,4 diméthyldibenzothiophène est alimentée avec une WH de 4h⁻¹ grâce à une pompe seringue Gilson, puis vaporisée en présence d'hydrogène grâce à un dispositif dédié avant d'être injectée dans le réacteur. La pression dans le réacteur est de 12 bar et le rapport molaire hydrogène/hydrocarbures en entrée du réacteur est égal à 200.

Dès la mise en contact de la charge avec le solide, on observe une chute quasi immédiate de la teneur en soufre dans l'effluent du réacteur jusqu'à des valeurs inférieures à 5 ppm massiques. Le profil de soufre en fonction du temps en sortie du réacteur est ainsi maintenu constant et inférieur à 5 ppm avant le phénomène de perçage qui correspond à une remontée de la concentration en soufre jusqu'à atteindre la valeur de concentration en soufre en entrée lorsque l'adsorbant est complètement saturé en soufre. Avant perçage, aucune trace de soufre n'a pu être détectée par le détecteur PFPD du chromatographe en phase gaz.

On peut distinguer deux paramètres représentant les performances du solide à base de ferrite de zinc :
- la capacité dynamique, qui correspond à la teneur en soufre piégée sur l'adsorbant juste avant le perçage. Dans les conditions opératoires utilisées, la capacité dynamique en soufre de l'adsorbant à base de ferrite de zinc est de 6,8 % massique.
- la capacité à saturation, qui correspond à la capacité maximale en soufre de l'adsorbant mesurée après saturation. Dans les conditions opératoires utilisées, la capacité en soufre à saturation de l'adsorbant à base de ferrite de zinc est de 13,4 % massique.

### Exemple n°3 (selon l'invention) : tests de désulfuration par chimisorption sur ferrite de zinc d'un composé soufré polycyclique en phase vapeur

La réaction d'adsorption du dibenzothiophène (DBT) pur a été étudiée en phase vapeur sous pression dans un réacteur ouvert à lit traversé. L'unité de tests utilisée est composée de trois parties :
- le dispositif d'introduction des réactifs,
- le dispositif de réaction,
- le dispositif d'analyse.

Le dispositif d'introduction des réactifs permet d'utiliser de l'hydrogène et du DBT. Le débit d'H₂ est régulé au moyen d'un débitmètre massique de marque Brooks (0-100 cm³.min⁻¹).

La tension de vapeur du DBT est régulée à l'aide d'un système saturateur-condenseur. L'hydrogène barbote dans le DBT contenu dans le saturateur et est maintenu à la température T_{S}. Le mélange gazeux traverse ensuite un serpentin (le condenseur) maintenu à température T_{C}, inférieure à T_{S}, ce qui permet une recondensation du DBT. Grâce à ce système, la tension de vapeur du DBT est parfaitement stable dans le reste de l'appareil. Les systèmes de réaction et d'analyse doivent être maintenus à une température supérieure à Tc. Le flux H₂-DBT est ensuite introduit dans le réacteur contenant le solide.

Le dispositif de réaction est constitué d'un tube en verre pyrex de 12 mm de diamètre avec un fritté inséré dans un réacteur en inox de diamètre légèrement supérieur. Un joint en téflon graphité assure l'étanchéité et peut résister à des températures de 300°C. La température de réaction est repérée au niveau du fritté à l'aide d'un doigt de gant permettant le passage d'un thermocouple. Après le réacteur, une vanne pointeau permet de réguler la pression dans l'appareil et d'assurer la détente à pression atmosphérique.

Après la réaction et la détente à pression atmosphérique, le mélange gazeux est analysé dans un chromatogramme (Hewlett Packard 5890 series II) à détection par ionisation de flamme (FID). Ces analyses nous permettent d'obtenir des courbes de percée représentant l'évolution de la concentration en DBT en sortie en fonction du temps.

280 mg de solide (sous forme de poudre tamisée entre 80 et 125µm) fabriqué selon la description de l'exemple n°1 sont introduits dans le réacteur et chauffés sous N₂ à 350°C avec une rampe de température de 10°C/min. Lorsque la température est stable, le mélange gazeux H₂/ DBT est envoyé sur le solide avec un débit de 70 ml/min et une pression de 7.10⁵ Pa (pression partielle de DBT = 195 Pa).

Lorsque la concentration en DBT en sortie du réacteur est stable (ou égale à celle en entrée), un bypass du réacteur est réalisé. Puis l'unité est balayée sous H₂ afin d'éliminer le DBT présent dans l'unité. L'unité et le réacteur sont ensuite balayés sous N₂ pendant environ 1 h puis le chauffage du réacteur est arrêté.

Dans ces conditions, il a été montré que la teneur en DBT était nulle dans l'hydrogène en sortie du réacteur avant perçage et que la capacité dynamique en soufre de la ferrite de zinc était de 8,8% massique. Sa capacité en soufre à saturation est égale à 15,3 % massique.

Exemple n°4 (selon l'invention) : désulfuration par chimisorption sur ferrite de zinc d'une charge modèle de type "essence lourde"

Le dispositif et la quantité de ferrite de zinc utilisés dans cet exemple sont en tout point similaires à ce qui est décrit dans l'exemple n°2.

Une charge modèle liquide constituée de 80% de décane et 20% de toluène contenant 50 ppmS massique de 3-méthylbenzothiophène est alimentée avec une VVH de 4h⁻¹ grâce à une pompe seringue Gilson, puis vaporisée en présence d'hydrogène grâce à un dispositif dédié puis injecté dans le réacteur. La pression dans le réacteur est de 15 bar et le rapport molaire hydrogène/hydrocarbures en entrée du réacteur est de 200.

Dès la mise en contact de la charge avec l'adsorbant, on observe une chute quasi immédiate de la teneur en soufre dans l'effluent du réacteur jusqu'à des valeurs inférieures à 5 ppm massiques. Le profil de soufre en fonction du temps en sortie du réacteur est ainsi maintenu constant et inférieur à 5 ppm avant le phénomène de perçage. Avant perçage, aucune trace de soufre a été détectée par le détecteur PFPD du chromatographe en phase gaz. Dans les conditions opératoires décrites dans le présent brevet, la capacité dynamique en soufre de l'adsorbant à base de ferrite de zinc est de 9,8% massiques et sa capacité en soufre à saturation est de 14,8 % massiques.

Exemple n°5 (test comparatif avec un oxyde à base de ferrite de zinc supporté sur une alumine)

A partir de poudres de ferrite de zinc et de bohemite, un solide est préparé par malaxage-extrusion. Les pourcentages massiques de zinc, de fer et d'aluminium sont respectivement de 5,4%, 9,3% et 21,2%. Les poudres d'oxydes sont mélangées dans un malaxeur en présence d'eau acidifiée. Après un malaxage de 30 minutes, à 25 rpm, la pâte obtenue est extrudée sur extrudeuse piston avec un déplacement du piston de 10 mm/min, à travers une filière de diamètre 3 mm. Les joncs sont finalement séchés une nuit à 80°C en l'étuve et calcinés à 650°C pendant 2h sous air. Après cette étape de calcination, le solide a été analysé par DRX et microscopie électronique à balayage et il a été mis en évidence la présence de phases qui sont majoritairement de la ferrite de zinc et de l'alumine..

Le solide présente une surface spécifique de 200 m²/g, l'alumine contribuant fortement à apporter cette propriété.

Le dispositif et la quantité de solide utilisés dans cet exemple sont en tout point similaires à ce qui est décrit dans les exemples n°2 et 4.

Dans ces conditions, il a été montré que le temps de perçage est plus rapide que dans le cas de la ferrite de zinc seule, et que la capacité dynamique en soufre de l'adsorbant chute à 1,5 % massique pour une capacité totale de 1,8 % massique. Si l'on compare la ferrite de zinc déposée sur alumine, il apparaît très nettement que sa capacité en soufre, tant dynamique qu'à saturation, est extrêmement réduite par rapport à la ferrite de zinc seule. La très forte surface spécifique offerte par ce composite par rapport à la ferrite de zinc seule (surface spécifique de la ferrite de zinc/alumine / surface spécifique de la ferrite de zinc seule > 20) ne permet donc pas de compenser l'effet de dilution de la ferrite de zinc par l'alumine.

## Revendications

1. Procédé de désulfuration d'une charge hydrocarbonée non oxygénée, comprenant des composés soufrés organiques, par captation de soufre sur un composé massique comprenant des oxydes de fer ou des oxydes de zinc et plus de 70% poids de ferrite de zinc, ledit procédé étant opéré en présence d'hydrogène à une température comprise entre 200°C et 450°C.

2. Procédé selon la revendication 1 dans lequel la pression est comprise entre 0,2 et 3,5 MPa.

3. Procédé selon l'une des revendications 1 ou 2 dans lequel la vitesse volumique horaire de charge à traiter est comprise entre 0,1 h⁻¹ et 10 h⁻¹.

4. Procédé selon l'une des revendications 1 à 3 dans lequel le rapport volumique hydrogène/charge hydrocarbonée est compris entre 5 et 400.

5. Procédé selon l'une des revendications 1 à 4 dans lequel la charge hydrocarbonée non oxygénée est une coupe essence, kérosène ou diesel.

6. Procédé selon l'une des revendications 1 à 5 dans lequel la charge hydrocarbonée non oxygénée est une coupe diesel.

7. Procédé selon l'une des revendications 1 à 6 dans lequel la charge comprend des composés soufrés cycliques.

8. Procédé selon l'une des revendications 1 à 7 dans lequel le composé massique comprend plus de 80% poids de ferrite de zinc.

9. Procédé selon l'une des revendications 1 à 8 dans lequel le composé massique comprend plus de 98% poids de ferrite de zinc.

10. Procédé selon l'une des revendications 1 à 9 dans lequel la pression est comprise entre 0,5 et 3 MPa.
